# EUROPEAN PATENT APPLICATION

(11) **EP 0 545 492 A1**
(43) Date of publication of application: **09.06.1993**
(21) Application number: 92203688.4
(22) Date of filing: 30.11.1992
(51) Int. Cl.: G02F 1/1335, G03B 21/60

(54) **LCD image projection system with moiré reduction**

(30) Priority: 03.12.1991 US 801239
(71) Applicant: Philips Electronics N.V., 5621 BA Eindhoven (NL)
(72) Inventor: Magocs, Stephen, NL-5656 AA Eindhoven (NL)
(74) Representative: Faessen, Louis Marie Hubertus

(57) **Abstract**

In a rear LCD image projection system with a projection screen (204) having longitudinal lenticulars (205) moiré effects are reduced by using a diagonally oriented LCD panel (306).

## Description

The present invention relates to a LCD image projection system comprising, in this order:
- an illumination subsystem
- an image display subsystem having at least one LCD panel including a plurality of addressable pixels separated by interpixel regions.
- a projection lenssystem for projection of the image generated by the display subsystem
- a projection screen for receiving the projected image and displaying it towards an audience, the projection screen comprising an array of longitudinal lenticulars each LCD panel having a rectangular shape, two opposite sides of which extend in a first direction effective parallel to the direction in which the screen lenticulars extend and the two remaining opposite sides of the LCD panel extend in a second direction perpendicular to said first direction.

The term image projection system should be understood in a wide sense and comprises a device for displaying, for example, a video image, a graphic image, numerical information or a combination thereof. The images may be both monochrome and colour images. In the latter case the display system may comprise three colour channels for, for example, the primary colours red, green and blue, each channel comprising a display panel.

With the phrase that the direction of two sides of the LCD panel is effective parallel to the direction of the screen-lenticulars is meant that the direction of the images of these sides, formed on the projection screen by the projection lens system and optical elements between the panel and the projection lenssystem, is parallel to that of the lenticulars.

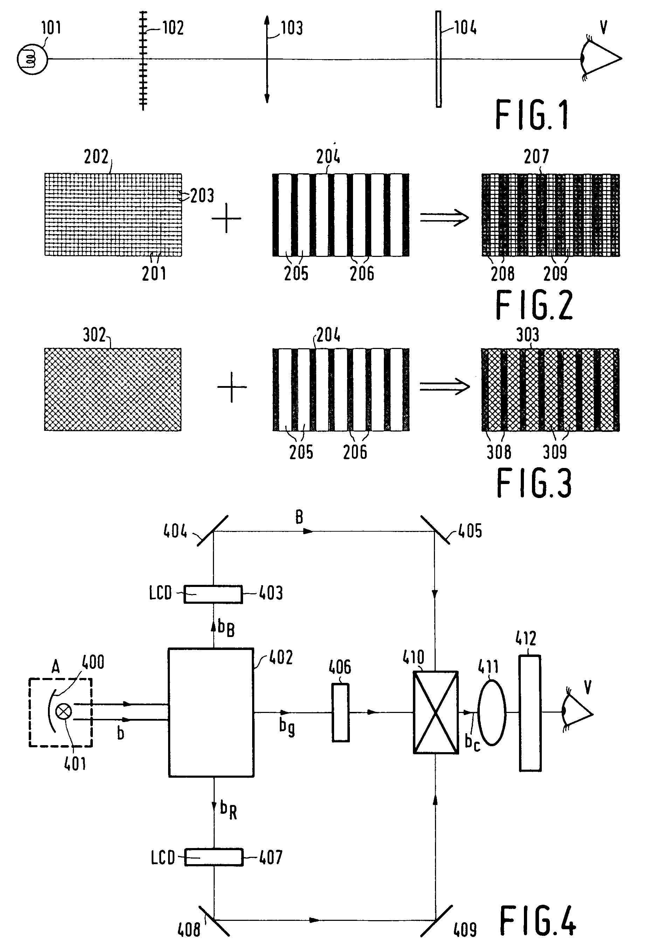

Several embodiments of LCD image projection systems are known. Figure 1 shows schematically a conventional rear projection system, i.e. a system wherein the projection screen is transmissive and the image display subsystem is arranged at one side of the screen and the audience is at the opposite side of the screen. In the system of Figure 1 an illumination subsystem, represented by a lamp 101, illuminates an image display subsystem represented by one LCD panel 102. The LCD panel 102 is controlled to selectively block light from the lamp in patterns which create an image, for example a picture. Light passing through the LCD panel 102 then passes through a projection lens system represented by a single lens 103 to be focused on a projection screen 104. The projection screen 104 comprises vertical lenticulars which may be separated by vertical black stripes. The stripes are added to increase contrast.

In this conventional system the image seen by a viewer V in the audience room is affected with Moiré fringes due to interference between vertical interpixel regions on the LCD panel and the vertical stripes on the lenticular screen. As shown in Fig. 2, this effectively multiplies the apparent width of the vertical stripes as shown at 207.

Figure 2 shows at 202 the structure of the LCD panel with the vertically and horizontally extending interpixel regions or strokes 201 and 203 respectively. At 204 the projection screen structure is shown with the vertically extending lenticulars and black stripes 205 and 206 respectively. 207 represents the apparent moiré patterns of black strokes 208 and image strokes 209. This Moiré pattern is annoying for the viewer and shades the projection image. In image projection systems wherein a Fresnel lens structure is added to the screen, for concentrating light from the LCD panel in the audience room, the Moiré effect is increased due to the vertical patterns of the Fresnel lens.

Numerous kinds of LCD panels have been used in conventional LCD direct view systems and in certain kinds of LCD projection systems. For instance, in Japanese Kokai 1-79728 and in co-pending application serial number 7/650,147 filed February 4, 1991, a system with diamond shaped LCD elements is proposed for use in a non-projection LCD system. In German patent document DE 3420549 C1, diagonal LCD elements are used in a projection oscilloscope to create a display in which diagonal portions of letters and oscilloscope traces are approximated by the diagonal LCD elements.

The object of the invention is to provide an LCD projection system with reduced moiré.

To that the system according to the invention is characterized in that the interpixel regions of the LCD panel extend in a direction substantially different from said first and second directions.
By changing the shape of the pixels with respect to the sides of the panel, and thus with respect to the screen lenticulars, none of the interpixel regions has a direction corresponding to that of the lenticulars and stripes of the screen, so that the above mentioned Moiré effect is considerably reduced.

It is remarked that it is known per sc a.o. from the Abstract of Jap. patent application No. 2.158725 to tilt the lenticulars of the projection screen with respect to the LCD image formed thereon. The experience with such tilting is however that it results in a color shift in and reduced brightness of the image seen by the audience.

The invention will now be described by way of non-limitative example with reference to the following drawings.

Fig. 1 shows a conversional LCD projection television.

Fig. 2 shows how the moiré fringes arise in this conversional television.

Fig. 3 shows how a diagonally oriented LCD matrix reduces moiré fringes.

Fig. 4 shows a rear LCD projection TV system which has three LCD panels.

As shown in Fig. 3, in the projection system according to the invention, a diagonally oriented LCD panel 302 is used in place of the vertically oriented LCD panel 202. The screen 204 may be according to Kokai 1-79728. The diagonally oriented panel 302 has LCD elements which are diamond-shaped, i.e. squares which are rotated 45° from the vertical, and the interpixel regions are diagonal. When projecting this panel structure 302 on the screen structure 204 the apparent width of the vertical stripes is not enlarged, as will be clear when comparing the black stripes 308 of the apparent structure 303 with the black stripes 206 of the screen 204. In this embodiment diagonal is 45° from the vertical. 45° gives a minimum moiré interference. Other angles may be used, but moiré will increase as the angle gets farther from 45°. As will be apparent to those of ordinary skill in the art, the LCD elements may have other shapes so long as the interpixel regions, projected on the lenticular screen, are not parallel to the lenticular.

Fig. 4 shows an embodiment of a color projection system wherein the invention is used. In this embodiment, an illumination beam b from the illumination system A comprising a lamp 401 and a reflector 400, is split in the color selective splitter 402 into three separate beams, one for each of the three colors red, green and blue. The three beams, of which only the chief rays bᵣ, b_{g} and b_{b} are shown, are incident on three LCD panels 403, 406 and 407, forming parts of the image display subsystem B. Each of the three LCD panels is controlled according to the component of the respective color in the picture to be displayed. Light from the LCD panels 403 and 407 is routed by mirrors 404 and 405, respectively mirrors 408 and 409 to the color selective beam combining element 410. Light from LCD panel 406 is naturally incident on beam combining element 410. The three beams are then combined in the beam combining element 410. The combined beam b_{c} from the beam combiner 410, which contains all the color image information, is directed to a projection lenssystem 411. The projection lenssystem images the three LCD's in a superposed manner on the projection screen 412.

In this embodiment, each LCD panel's pixels are oriented diagonally, so that none of the LCD's interpixel regions introduce moiré interference at the lenticular screen 412. While those ordinary skill in the art might devise any number of light paths for use in such a projection system, the moiré patterns will be reduced so long as the interpixel regions, as projected on the lenticular screen, are not parallel to the lenticular.

Although the invention has been described for a rear projection system, it can also be used in a front projection system, i.e. a system with a reflective projection screen, wherein the projection screen has vertical lenticulars.

## Claims

1. A LCD image projection system comprising, in this order:
- an illumination subsystem
- an image display subsystem having at least one LCD panel including a plurality of addressable pixels separated by interpixel regions.
- a projection lenssystem for projection of the image generated by the display subsystem
- a projection screen for receiving the projected image and displaying it towards an audience, the projection screen comprising an array of longitudinal lenticulars each LCD panel having a rectangular shape, two opposite sides of which extend in a first direction effective parallel to the direction in which the screen lenticulars extend and the two remaining opposite sides of the LCD panel extend in a second direction perpendicular to said first direction, characterized in that the interpixel regions of the LCD panel extend in a direction substantially different from said first and second directions.

2. A LCD image projection system as claimed in Claim 1, characterized in that the lenticulars extend in the audience vertical direction and are separated by black stripes for contrast and in that the interpixel regions extend in diagonal directions.

3. A LCD image projection as claimed in Claim 1 or 2 characterized in that the LCD pixels are diamond-shaped and the interpixel regions extend in directions at 45° with said first and second directions.

4. A LCD image projection system wherein the image display subsystem comprises three LCD panels for displaying three differently colored images and a beam combiner for combining radiation beams from the three panels into one radiation beam, characterized in that the interpixel regions of each LCD panel satisfy the conditions as defined in Claim 1, 2, or 3.
